# EUROPÄISCHE PATENTSCHRIFT

(11) **EP 4 374 441 B1**
(45) Veröffentlichungstag und Bekanntmachung des Hinweises auf die Patenterteilung: **09.12.2026**
(21) Anmeldenummer: 21752501.3
(22) Anmeldetag: 19.07.2021
(51) Int. Cl.: H01M 8/04014, H01M 8/04089, H01M 8/10

(54) **VORRICHTUNG ZUR ANODENGASREZIRKULATION IN EINEM BRENNSTOFFZELLENSYSTEM**
DEVICE FOR ANODE GAS RECIRCULATION IN A FUEL CELL SYSTEM
DISPOSITIF DE RECYCLAGE DU GAZ DE L'ANODE D'UN SYSTÈME DE PILE À COMBUSTIBLE

(43) Veröffentlichungstag der Anmeldung: 29.05.2024
(73) Patentinhaber: Pierburg GmbH, 41460 Neuss (DE)
(72) Erfinder: ROTHGANG, Stefan, 41460 Neuss (DE); BURGER, Andreas, 41460 Neuss (DE); BENRA, Michael-Thomas, 41460 Neuss (DE)
(74) Vertreter: Eisenführ Speiser
(86) Internationale Anmeldenummer: PCT/EP2021/070137
(87) Internationale Veröffentlichungsnummer: WO 2023/001360

(56) Entgegenhaltungen:
- EP-A1- 2 141 761
- DE-A1- 102008 045 170
- DE-A1- 102010 035 860
- DE-A1- 102017 222 390

## Beschreibung

Die Erfindung betrifft Vorrichtung zur Anodengasrezirkulation in einem Brennstoffzellensystem mit einem Gebläse mit einem Gebläseeinlass und einem Gebläseauslass, einer Schnittstelleneinheit mit einem ersten Anodengaskanal, der sich von einem ersten Einlass, der mit einem Brennstoffzellenauslass einer Brennstoffzelleneinheit fluidisch verbunden ist, zu einem ersten Auslass, der mit dem Gebläseeinlass verbunden ist, erstreckt, und einem zweiten Anodengaskanal, der sich von einem zweiten Einlass, der mit dem Gebläseauslass verbunden ist, zu einem zweiten Auslass, der mit einem Brennstoffzelleneinlass der Brennstoffzelleneinheit fluidisch verbunden ist, erstreckt.

Brennstoffzellensysteme dienen zur Umwandlung von chemischer Reaktionsenergie eines kontinuierlich zugeführten Brennstoffes, insbesondere Wasserstoff und eines Oxidationsmittels, zumeist Sauerstoff, in elektrische Energie, die beispielsweise als Antriebsenergie für Fahrzeuge verwendet werden kann. Der Wasserstoffpfad einer Niedertemperatur Brennstoffzelle, wie sie üblicherweise in Fahrzeugen verwendet wird, besteht im Wesentlichen aus der Zuführstrecke des reinen Wasserstoffs über Druckminderungs- und Dosierventil, der eigentlichen Brennstoffzelleneinheit und einem Rezirkulationspfad, der den Austritt der Brennstoffzelleneinheit mit dessen Eintritt, also der Wasserstoff-Zuführstrecke, gasdicht verbindet. Der so entstehende Kreislauf wird als Anodengasrezirkulationskreislauf bezeichnet. Dieser Anodengasrezirkulationskreislauf ist erforderlich, um keinen ungenutzten Wasserstoff in die Atmosphäre zu entlassen, der vorhanden ist, weil die Versorgung der Brennstoffzelleneinheit mit Frischwasserstoff überstöchiometrisch erfolgt. Somit wird der Anodengaskreislauf geschlossen ausgeführt und der unverbrauchte Wasserstoff mittels eines Rezirkulationsgebläses in die Zuführstrecke hinter der Wasserstoffdosierung zurückgeführt. Derartige Gebläse werden beispielsweise als Seitenkanalgebläse ausgebildet. Der Antrieb dieser Gebläse erfolgt üblicherweise über Elektromotoren, die beim Betrieb in Fahrzeugen über die Fahrzeugbatterie mit Spannung versorgt werden. Neben dem unverbrauchten Wasserstoff besteht das zurückgeführte Anodengas aus den Bestandteilen Stickstoff der aus der Frischluft der Brennstoffzelleneinheit stammt, sowie Wasserdampf. Außerdem liegt flüssiges Produktwasser am Austritt der Brennstoffzelleneinheit vor.

Die Verbindung der Brennstoffzelleneinheit mit dem Anodengaskreislauf beziehungsweise mit dem Gebläse zur Anodengasrezirkulation erfolgt zumeist über Verrohrungen oder Schläuche. Des Weiteren ist es beispielsweise aus der DE 10 2017 222 390 A1 bekannt, zwischen dem Rezirkulationsgebläse und der Brennstoffzelleneinheit eine plattenförmige Schnittstelleneinheit anzuordnen, über die das Anodengas ohne die Verwendung von zusätzlichen Schläuchen und Rohren zwischen dem Gebläse und der Brennstoffzelleneinheit durch entsprechend in der Schnittstelleneinheit ausgebildete Anodengaskanäle gefördert werden kann. Die Verbindung zur Brennstoffzelleneinheit und zum Rezirkulationsgebläse kann auf diese Weise über einfache Flanschverbindungen erfolgen. Eine ähnliche Anordnung ist aus EP 2 141 761 A1 bekannt.

Des Weiteren wird in der DE 10 2008 045 170 A1 vorgeschlagen, einen Kühlwärmetauscher im Bereich des Rezirkulationsgebläses vorzusehen, um dessen Wärme erzeugenden Komponenten mit dem frischen Brennstoff als Kühlmittel zu kühlen. Für eine solche Kühlung sind entsprechend zusätzliche Leitungen und Rohre zum Anschluss des Kühlmittels zu verwenden. Eine ähnliche Anordnung ist aus DE 10 2010 035 860 A1 bekannt.

Es stellt sich daher die Aufgabe, eine Vorrichtung zur Anodengasrezirkulation in einem Brennstoffzellensystem zur Verfügung zu stellen, mit welcher der Aufwand zur Montage verringert und eine langlebige Dichtheit des Anodengaskreislaufs sichergestellt werden kann. Entsprechend soll die Anzahl an Rohren und Schläuchen minimiert werden und so auch Fehler bei der Montage vermieden werden.

Diese Aufgabe wird durch eine Vorrichtung zur Anodengasrezirkulation in einem Brennstoffzellensystem mit den Merkmalen des Hauptanspruchs 1 gelöst.

Die erfindungsgemäße Vorrichtung zur Anodengasrezirkulation in einem Brennstoffzellensystem weist ein Gebläse mit einem Gebläseeinlass und einem Gebläseauslass. Entsprechend wird durch das Gebläse das über den Gebläseeinlass einströmende Anodengas, welches aus Stickstoff, Wasserstoff und Wasser beziehungsweise Wasserdampf besteht, vom Gebläseeinlass zum Gebläseauslass gefördert, wobei unter Gebläseeinlass jedoch nicht zwangsweise der Einlass in einen Förderkanal verstanden wird, sondern auch interne vorgeschaltete Kanäle im Gebläse, wie Kühlmitteleinlässe einen Gebläseeinlass bilden können. Des Weiteren weist die Vorrichtung eine Schnittstelleneinheit auf. Diese ist zumeist ein quader- oder plattenförmiges Bauteil, in dem ein erster Anodengaskanal, der sich von einem ersten Einlass zu einem ersten Auslass erstreckt, ausgebildet ist. Der erste Einlass ist zumindest fluidisch mit einem Brennstoffzellenauslass einer Brennstoffzelleneinheit verbunden, wobei auch eine direkte mechanische Verbindung der Brennstoffzelleneinheit mit dem Gebläse über die Schnittstelleneinheit erfolgen kann. Der erste Auslass ist mit dem Gebläseeinlass verbunden, wobei sich vom Gebläseeinlass sowohl ein Kühlkanal als auch ein Förderkanal des Gebläses erstrecken können. Des Weiteren ist in der Schnittstelleneinheit ein zweiter Anodengaskanal ausgebildet, der sich von einem zweiten Einlass zu einem zweiten Auslass erstreckt, wobei der zweite Einlass mit dem Gebläseauslass verbunden ist und der zweite Auslass mit einem Brennstoffzelleneinlass der Brennstoffzelleneinheit fluidisch verbunden ist. Hier können die Verbindungen der Brennstoffzelleneinheit zur Schnittstelleneinheit entweder unmittelbar oder über zwischengeschaltete Kanäle erfolgen. Das Gebläse ist unmittelbar an der Schnittstelleneinheit angeordnet und die Verbindung erfolgt ausschließlich über die Kanäle der Schnittstelleneinheit. Das Gebläse weist einen Förderkanal mit einem Förderkanaleinlass und einem Förderkanalauslass und einen Kühlkanal auf, der einen Elektromotor des Gebläses zumindest teilweise umgibt, so dass dieser gekühlt wird. Der Förderkanaleinlass kann dabei den Gebläseeinlass bilden, kann jedoch auch im Innern des Gebläses ausgebildet sein. Zum Elektromotor gehört diesbezüglich auch die Elektronik des Elektromotors. Der Kühlkanal erstreckt sich von einem Kühlkanaleinlass zu einem Kühlkanalauslass am Gebläse, wobei unter Kühlkanaleinlass und -auslass lediglich der Anfang und das Ende des Kühlkanals zu verstehen ist, die am entsprechenden Ort ein Einströmen oder Ausströmen in ein oder aus einem Gehäuseteil ermöglichen. Der Kühlkanal ist entweder über den Kühlkanaleinlass mit dem ersten Auslass oder einem dritten Auslass der Schnittstelleneinheit verbunden und/oder über den Kühlmittelauslass mit einem dritten Einlass oder dem zweiten Einlass der Schnittstelleneinheit verbunden. Entsprechend liegt entweder eine Verbindung zum Anodengaskanal vor, der dann als Kühlmittelkanal dient, oder zu einem separaten Kühlmittelkanal. Das Gebläse ist an der Schnittstelleneinheit befestigt, so dass keine weiteren Zwischenelemente benötigt werden. Alle Verbindungen der Schnittstelleneinheit zum Gebläse, einschließlich der Verbindungen zur Versorgung des Gebläses mit Kühlmittel können über die Schnittstelleneinheit erfolgen. Auf Rohre oder Schläuche zum Anschluss an das Gebläse kann somit vollständig verzichtet werden. Die Anschlüsse der Schnittstelleneinheit sind selbstverständlich korrespondierend zu den Anschlüssen am Gebläse anzuordnen, wodurch eine falsche Montage durch Verwechseln von Leitungen unmöglich wird. Zusätzlich wird hierdurch der Montageaufwand minimiert.

In einer bevorzugten Ausbildung der Erfindung dient das Anodengas als Kühlmittel und dient somit zur Konditionierung des Gebläses. Das zurückgeführte Anodengas weist neben dem Wasserstoff eine Wassersättigung auf, was eine hohe Wärmekapazität und Wärmeleitung hervorruft, so dass ein guter Kühleffekt entsteht.

Vorzugsweise weist die Schnittstelleneinheit eine Flanschfläche auf, in der der erste Auslass und der zweite Einlass ausgebildet sind. Somit liegen die Anschlussöffnungen des Gebläses in einer gemeinsamen Ebene. So kann durch ein lineares Auf- oder Gegenschieben der Flanschfläche auf beziehungsweise gegen die korrespondierenden Anschlüsse des Gebläses die fluidische Verbindung geschaffen werden. Durch Festziehen der Flanschschrauben wird somit ein langlebiger und dichter Anschluss zum Gebläse geschaffen.

In einer hierzu weiterführenden Ausführungsform weist das Gebläse einen Flansch auf, der mit der Flanschfläche der Schnittstelleneinheit verbunden ist, und in dem der Gebläseeinlass und der Gebläseauslass ausgebildet sind. Der Gebläseeinlass ist korrespondierend zum ersten Auslass der Schnittstelleneinheit angeordnet und der Gebläseauslass ist korrespondierend zum zweiten Einlass der Schnittstelleneinheit angeordnet, so dass durch Befestigung der Flanschfläche am Flansch des Gebläses sowohl eine mechanische Befestigung der Schnittstelleneinheit zum Gebläse erfolgt als auch die Schaffung der fluidischen Verbindungen in nur einem Montageschritt.

Die Schnittstelleinheit weist nun zusätzlich einen dritten Einlass und einen dritten Auslass auf, wobei der dritte Auslass mit einem Kühlkanaleinlass am Gebläse verbunden ist, und der dritte Einlass mit einem Kühlkanalauslass verbunden ist. Entsprechend bestehen in diesem Fall zwei Gebläseeinlässe und zwei Gebläseauslässe, nämlich einmal der Kühlmitteleinlass und - auslass und zum Zweiten der Förderkanaleinlass und -auslass. Somit wird das Gebläse über die Schnittstelleinheit auch mit einem Kühlmittel versorgt, welches über die Schnittstelleneinheit in das Gebläse beziehungsweise dessen Kühlkanal einströmt und auch aus dem Kühlkanal wieder in die Schnittstelleneinheit einströmt. Somit können alle Verbindungen zum Gebläse, einschließlich der Verbindungen zur Versorgung des Gebläses mit Kühlmittel über die Schnittstelleneinheit erfolgen. Auf Rohre oder Schläuche zum Anschluss an das Gebläse kann erneut vollständig verzichtet werden. Eine falsche Montage wird zuverlässig verhindert.

Vorzugsweise weist die Schnittstelleneinheit eine Flanschfläche auf, in der der erste Auslass, der zweite Einlass, der dritte Auslass und der dritte Einlass ausgebildet sind. Somit liegen alle Anschlussöffnungen des Gebläses in einer gemeinsamen Ebene. So kann durch ein lineares Auf- oder Gegenschieben der Flanschfläche auf beziehungsweise gegen die korrespondierenden Anschlüsse des Gebläses die fluidische Verbindung geschaffen werden. Durch Festziehen der Flanschschrauben wird somit ein langlebiger und dichter Anschluss zum Gebläse geschaffen.

In einer hierzu weiterführenden Ausführungsform weist das Gebläse einen Flansch auf, der mit der Flanschfläche der Schnittstelleneinheit verbunden ist, und in dem der als Förderkanaleinlass dienende Gebläseeinlass, der als Förderkanalauslass dienende Gebläseauslass, der Kühlkanaleinlass und der Kühlkanalauslass ausgebildet sind. Diese sind selbstverständlich korrespondierend zum ersten Auslass, zweiten Einlass, dritten Auslass und dritten Einlass der Schnittstelleneinheit angeordnet, so dass durch Befestigung der Flanschfläche am Flansch des Gebläses sowohl eine mechanische Befestigung der Schnittstelleneinheit zum Gebläse als auch die Schaffung aller vier fluidischer Verbindungen in nur einem Montageschritt erfolgt.

Alternativ weist das Gebläse einen Flansch auf, der mit der Flanschfläche der Schnittstelleneinheit verbunden ist, und in dem der Förderkanaleinlass, und der Förderkanalauslass ausgebildet sind, und einen Kühlkanaleinlassstutzen und einen Kühlkanalauslassstutzen auf, die in den dritten Auslass und den dritten Einlass der Schnittstelleneinheit ragen. Somit wird die Flanschfläche der Schnittstelleneinheit bei der Montage zunächst über die Kühlmittelstutzen des Gebläses geschoben, die entsprechend in die Öffnungen des dritten Einlasses und dritten Auslasses der Schnittstelleneinheit ragen, bis der Flansch des Gebläses gegen die Flanschfläche anliegt. In diesem Zustand tauchen die Kühlmittelstutzen vollständig in den dritten Einlass und den dritten Auslass vorzugsweise unter Zwischenlage einer Dichtung, ein. Auch bei dieser Ausbildung werden entsprechend durch einen einzigen Montageschritt alle Verbindungen zwischen der Schnittstelleneinheit und dem Gebläse hergestellt und das Gebläse an der Schnittstelleneinheit befestigt.

In einer bevorzugten Ausführungsform ist in der Schnittstelleneinheit ein Kühlmitteleinlasskanal ausgebildet, der sich von einem Kühlmitteleinlass zum dritten Auslass erstreckt, und ein Kühlmittelauslasskanal ausgebildet, der sich vom dritten Einlass zu einem Kühlmittelauslass erstreckt. Entsprechend sind die Anodengaskanäle und die Kühlmittelkanäle der Schnittstelleneinheit vollständig unabhängig voneinander, so dass ein beliebiges Kühlmittel genutzt werden kann.

Bei der Verwendung des Anodengases als Kühlmittel weist der erste Anodengaskanal in einer bevorzugten Ausführungsform eine Verzweigung auf, so dass der erste Einlass mit dem ersten Auslass und dem dritten Auslass verbunden ist und der zweite Anodengaskanal eine Verzweigung auf, so dass der zweite Einlass und der dritte Einlass mit dem zweiten Auslass verbunden sind. Somit entsteht eine Parallelschaltung des Kühlkanals und des Förderkanals des Gebläses, wobei die beiden Ströme stromabwärts des Gebläses wieder zusammengeführt werden und zur Brennstoffzelleneinheit strömen. So kann die Anzahl der Anschlüsse zur Brennstoffzelleneinheit weiter klein gehalten werden und weiterhin die Montage durch einfaches Anbinden der Flansche durchgeführt werden. Allerdings muss sichergestellt werden, dass auch der Kühlkanal in der richtigen Richtung durchströmt wird. Hierzu sind gegebenenfalls zusätzliche Fördermittel vorzusehen.

In einer alternativen Ausbildung der Erfindung ist der erste Anodengaskanal über den ersten Auslass mit dem Kühlkanaleinlass verbunden, der Kühlkanalauslass mit dem Förderkanaleinlass des Gebläses verbunden und der Förderkanalauslass über den zweiten Einlass mit dem zweiten Anodengaskanal verbunden. So wird eine serielle Durchströmung des Gebläses erreicht, wobei zunächst der Kühlkanal des Gebläses durchströmt wird und anschließend das Anodengas aus dem Kühlkanal in den Förderkanal gelangt und zurück zur Brennstoffzelleneinheit gefördert wird. Bei einer derartigen Ausbildung kann auch zunächst das Wasser aus dem Anodengas abgeschieden werden und somit nicht mehr durch den Förderkanal gefördert werden. Des Weiteren erfolgt die Erwärmung durch die Förderung erst nach dem Durchströmen des Kühlkanals.

Besonders bevorzugt ist es jedoch, wenn der der Kühlkanalauslass über den dritten Einlass, einen Umkehrkanal und den dritten Auslass in der Schnittstelleneinheit mit dem Förderkanaleinlass verbunden ist und der zweite Einlass, der mit dem Förderkanalauslass verbunden ist, mit dem zweiten Auslass verbunden ist. So kann auf einfache Weise in der Schnittstelleneinheit die serielle Verbindung des Kühlkanals zum Förderkanal hergestellt werden. Weitere Anschlüsse können somit entfallen. Vorzugsweise weist das Gebläse zumindest ein Gebläsekopfgehäuse, in dem zumindest teilweise ein Förderkanal des Gebläses ausgebildet ist, und ein Motorgehäuse auf, welches den Elektromotor zumindest teilweise umgibt. Auf diese Weise kann der Elektromotor mit dem ihn umgebenden Kühlkanal montiert werden und anschließend das Laufrad auf die Motorausgangswelle montiert werden, wobei der Förderraum durch das Gebläsekopfgehäuse geschlossen wird.

In einer hierzu weiterführenden Ausführungsform ist der Kühlkanalauslass im Motorgehäuse ausgebildet und der Förderkanaleinlass im Gebläsekopfgehäuse ausgebildet. Die Verbindung kann so über die Schnittstelleinheit besonders einfach ausgeführt werden.

Der Kühlkanalauslass mündet dann vorzugsweise unmittelbar in den Förderkanaleinlass, so dass keine weiteren Kanäle in der Schnittstelleneinheit ausgeführt werden müssen.

Die Schnittstelleneinheit wird vorzugsweise einstückig mit dem Motorgehäuse oder dem Gebläsekopfgehäuse ausgebildet. Für den Fall das der Kühlkanaleinlass und der Kühlkanalauslass im Flansch ausgebildet sind, muss entsprechend eine interne Verbindung des Kühlkanals zum Gebläsekopfgehäuse vorliegen.

Vorzugsweise ist der Flansch des Gebläses am Gebläsekopfgehäuse ausgebildet. Die Herstellung ist im Vergleich zur Ausbildung mit dem Motorgehäuse deutlich einfacher, da eine einfachere Entformung möglich ist.

Es wird somit eine Vorrichtung zur Anodengasrezirkulation in einem Brennstoffzellensystem geschaffen, welche wenig Bauraum benötigt und trotz der Verwirklichung einer Kühlung des Antriebsmotors leicht und in wenigen Schritten zu montieren ist. Auch kann auf einfache Weise eine hohe und langlebige Dichtigkeit erreicht werden. Auf jegliche Rohr- oder Schlauchverbindungen kann verzichtet werden.

Mehrere erfindungsgemäße Ausführungsbeispiele sind in den Figuren dargestellt und werden nachfolgend beschrieben.
Figur 1 zeigt eine perspektivische Ansicht eines ersten Ausführungsbeispiels eines Gebläses einer erfindungsgemäßen Vorrichtung zur Anodengasrezirkulation in einem Brennstoffzellensystem.
Figur 2 zeigt eine perspektivische Ansicht eines zweiten Ausführungsbeispiels eines Gebläses einer erfindungsgemäßen Vorrichtung zur Anodengasrezirkulation in einem Brennstoffzellensystem.
Figur 3 zeigt eine schematische Darstellung einer ersten erfindungsgemäßen Vorrichtung zur Anodengasrezirkulation in einem Brennstoffzellensystem.
Figur 4 zeigt eine schematische Darstellung einer zweiten erfindungsgemäßen Vorrichtung zur Anodengasrezirkulation in einem Brennstoffzellensystem.
Figur 5 zeigt eine schematische Darstellung einer dritten erfindungsgemäßen Vorrichtung zur Anodengasrezirkulation in einem Brennstoffzellensystem.
Figur 6 zeigt eine schematische Darstellung einer vierten erfindungsgemäßen Vorrichtung zur Anodengasrezirkulation in einem Brennstoffzellensystem.

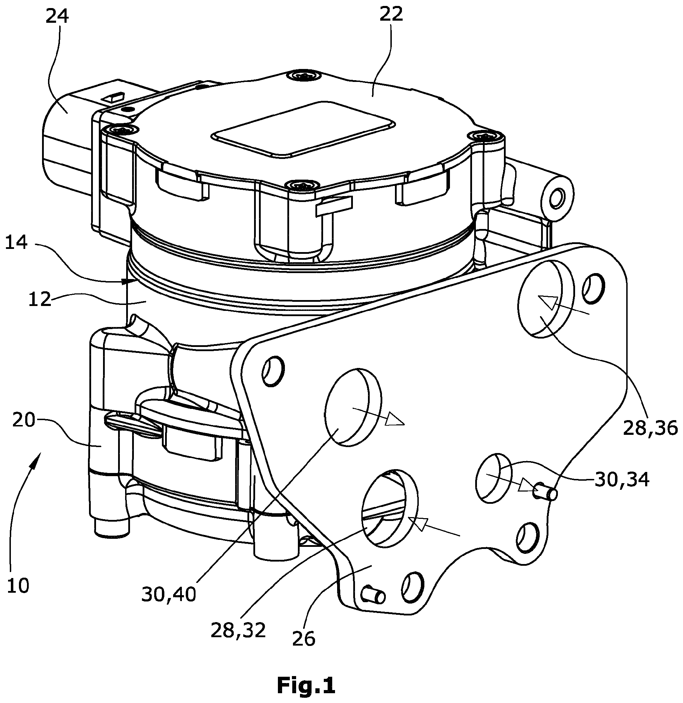

Das in der Figur 1 dargestellte Gebläse 10 weist ein Motorgehäuse 12 auf, in dem ein Elektromotor 14 angeordnet ist, der ein Laufrad 16 antreibt, über welches ein Anodengas über einen Förderkanal 18 gefördert wird, der zumindest teilweise in einem Gebläsekopfgehäuse 20 ausgebildet ist. Das Motorgehäuse 12 wird an der zum Gebläsekopfgehäuse 20 entgegengesetzten axialen Seite durch einen Deckel 22 verschlossen hinter dem die Elektronik des Elektromotors 14 angeordnet ist, welche ebenso wie die Wicklungen des Stators über einen Stecker 24 an eine Spannungsquelle angeschlossen ist.

Am Gebläsekopfgehäuse 20 ist im vorliegenden Ausführungsbeispiel ein Flansch 26 ausgebildet, an dem zwei Gebläseeinlässe 28 und zwei Gebläseauslässe 30 ausgebildet sind. Der erste Gebläseeinlass 28 dient als Förderkanaleinlass 32, über den Wasserstoff direkt in den Förderkanal 18 gelangt, während der erste Gebläseauslass 30 als Förderkanalauslass 34 dient. Der zweite Gebläseeinlass 28 dient als Kühlkanaleinlass 36, der in einen im Motorgehäuse 12 ausgebildeten und den Elektromotor 14 zumindest teilweise umgebenden Kühlkanal 38 führt, der an dem als Kühlkanalauslass 40 dienenden zweiten Gebläseauslass 30 endet. Der Kühlkanal 38 kann entsprechend mit einem Kühlmittel zur Abführung von Wärme aus dem Elektromotor 14 versorgt werden.

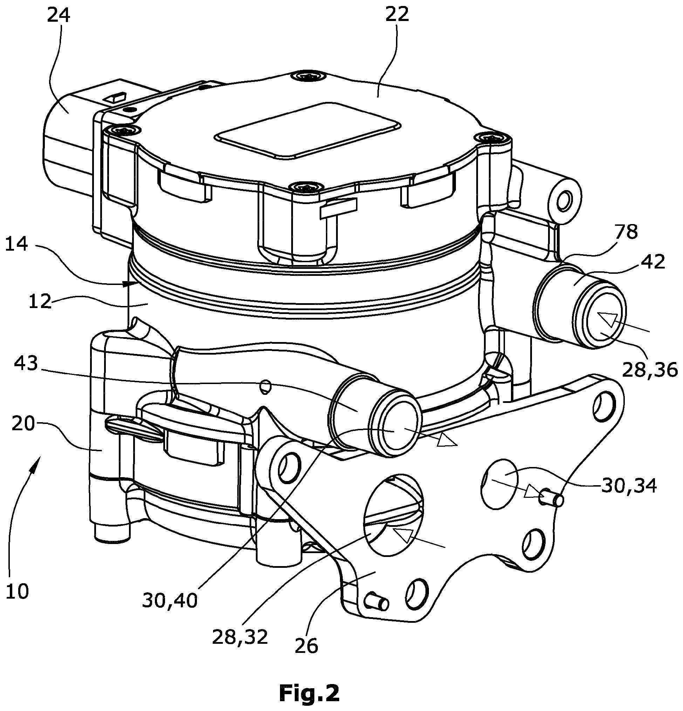

In der in Figur 2 dargestellten Ausbildung sind der Kühlmitteleinlass 36 und der Kühlmittelauslass 38 als Kühlmitteleinlassstutzen 42 und Kühlmittelauslassstutzen 43 ausgebildet, die sich senkrecht aus der Ebene des Flansches 26 heraus erstrecken und direkt am Motorgehäuse 12 ausgebildet sind.

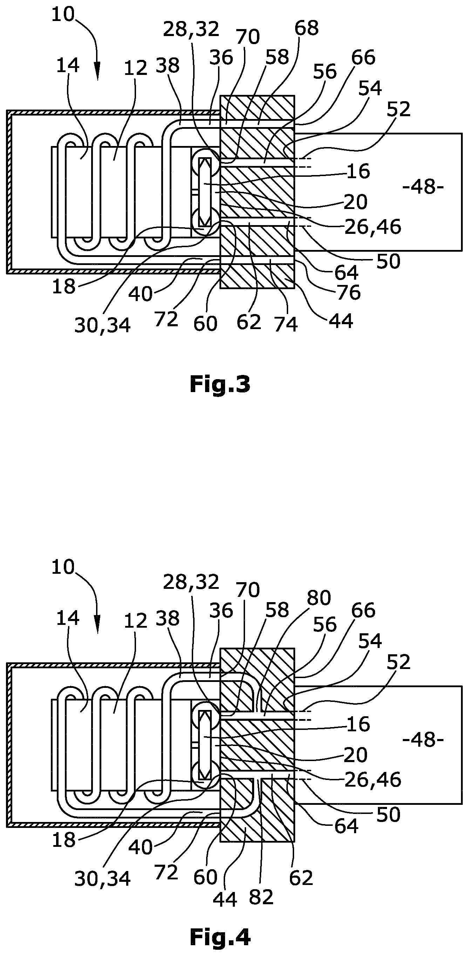

In den Figuren 3 bis 6 sind Ausführungsbeispiele dargestellt, wie solche Gebläse 10 in ein Brennstoffzellensystem erfindungsgemäß integriert werden können.

Beim Ausführungsbeispiel gemäß der Figur 3 ist an das Gebläse 10 eine Schnittstelleneinheit 44 angeschlossen, welche eine Flanschfläche 46 aufweist, deren Lochbild zum Lochbild des Flansches 26 des Gebläses 10 gemäß Figur 1 oder zum Lochbild des Flansches 26 und dem Kühlkanaleinlassstutzen 42 und dem Kühlkanalauslassstutzen 43 des Gebläses gemäß Figur 2 korrespondiert.

An der zur Schnittstelleneinheit 44 gegenüberliegenden Seite des Gebläses 10 ist eine Brennstoffzelleneinheit 48 befestigt, die einen Brennstoffzelleneinlass 50 und einen Brennstoffzellenauslass 52 aufweist. Der Brennstoffzellenauslass 52 ist über einen ersten Einlass 54 der Schnittstelleneinheit 44 mit einem ersten Anodengaskanal 56 verbunden, der sich durch die Schnittstelleneinheit 44 zu einem ersten Auslass 58 erstreckt, der gegenüberliegend zum Gebläseeinlass 28 beziehungsweise Förderkanaleinlass 32 angeordnet ist, so dass das Anodengas aus der Brennstoffzelleneinheit 48, das Stickstoff, Wasserstoff und Wasserdampf enthält, zum Förderkanal 18 gelangt, dort verdichtet wird und über den Gebläseauslass 30 beziehungsweise Förderkanalauslass 34 zurück über einen zweiten Einlass 60, der ebenso wie der erste Auslass 58 in der Flanschfläche 46 der Schnittstelleneinheit 44 ausgebildet ist, in die Schnittstelleneinheit 44 zurück gefördert wird. Vom zweiten Einlass 60 gelangt das Anodengas in einen sich wiederum durch die Schnittstelleneinheit hindurch erstreckenden zweiten Anodengaskanal 62, der in der Schnittstelleneinheit 44 an einem zweiten Auslass 64 endet, der in einer Ebene mit dem ersten Einlass 54 angeordnet ist, und der mit dem Brennstoffzelleneinlass 50 verbunden ist, so dass das Anodengas über das Gebläse 10 in die Brennstoffzelleneinheit 48 zurückgeführt wird, ohne dass zusätzliche Leitungen oder Rohre benötigt werden.

Zusätzlich weist die Schnittstelleneinheit 44 einen Kühlmitteleinlass 66 auf, der über einen Kühlmitteleinlasskanal 68 mit einem dritten Auslass 70 verbunden ist, der wiederum korrespondierend zum Kühlkanaleinlass 36 des Gebläses 10 angeordnet ist. Entsprechend zirkuliert das Kühlmittel durch den Kühlkanal 38 um den Elektromotor 14 herum und verlässt das Gebläse 10 über den Kühlkanalauslass 40, der wiederum mit einem dritten Einlass 72 der Schnittstelleneinheit 44 verbunden ist, so dass das Kühlmittel über den dritten Einlass 72 in einen Kühlmittelauslasskanal 74 in der Schnittstelleneinheit 44 strömt, der sich bis zu einem Kühlmittelauslass 76 erstreckt, über den das Kühlmittel abgeführt werden kann.

Der Kühlkanaleinlass 36 und der Kühlkanalauslass 40 können, wie in den Figuren 1 und 2 dargestellt, entweder im Flansch 26 oder als Kühlkanaleinlassstutzen 42 und Kühlkanalauslassstutzen 43 ausgebildet werden. Während die Verbindung der Einlässe und Auslässe des Gebläses 10 und der Schnittstelleneinheit 44 zueinander im erstgenannten Fall durch Anschrauben der Flanschfläche 46 gegen den Flansch 26 erfolgt, wird im zweitgenannten Fall zunächst die Flanschfläche 46 der Schnittstelleneinheit 44 mit ihrem dritten Einlass 72 und dritten Auslass 70 über den Kühlkanaleinlassstutzen 42 und den Kühlkanalauslassstutzen 43 geschoben und sollte an den Stutzen 42, 43 gegen einen Anschlag 78 geschoben werden, der sich in einer Ebene mit dem Flansch 26 befindet. Durch Zwischenlage einer Dichtung kann so auch hier durch Festziehen der Flanschfläche 46 am Flansch 26 eine feste und fluidische Verbindung der Einlässe und Auslässe zueinander zwischen der Schnittstelleneinheit 44 und dem Gebläse 10 hergestellt werden.

Als Kühlmittel kann neben den bekannten Kühlmitteln wie Glykol oder auch Kühlwasser das Anodengas selbst verwendet werden. In diesem Fall kann neben dem bereits beschriebenen Ausführungsbeispiel eine Vereinfachung erreicht werden, indem beispielweise, wie dies in Figur 4 dargestellt ist, der erste Anodengaskanal 56 und der zweite Anodengaskanal 62 jeweils eine Verzweigung 80, 82 aufweisen, so dass der erste Einlass 54 der Schnittstelleneinheit 44 fluidisch sowohl mit dem ersten Auslass 58 als auch mit dem dritten Auslass 70 verbunden ist und der zweite Auslass 64 der Schnittstelleneinheit 44 mit dem zweiten Einlass 60 und dem dritten Einlass 72 verbunden ist. Entsprechend werden der Kühlkanal 38 und der Förderkanal 18 durch die Schnittstelleneinheit 44 parallel geschaltet. Sollte aufgrund dieser Parallelschaltung der Förderdruck im Kühlkanal 38 nicht ausreichen, so muss hier selbstverständlich im Kühlkanal 38 eine zusätzliche Fördereinheit vorgesehen werden, um sicherzustellen, dass das Anodengas tatsächlich im Kühlkanal 38 und im Förderkanal 18 parallel strömt.

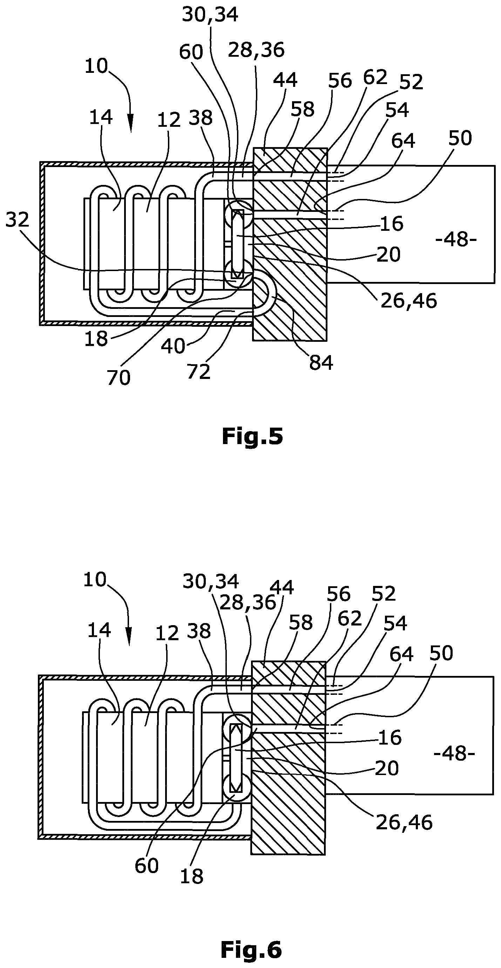

Es ist jedoch auch möglich, wie dies in Figur 5 dargestellt ist, den Kühlkanal 38 seriell zum Förderkanal 18 zu schalten, so dass zunächst der Kühlkanal 38 und dann der Förderkanal 18 durchströmt wird.

Die Schnittstelleneinheit 44 wird dann so ausgeführt, dass weiterhin der erste Einlass 54 mit dem Brennstoffzellenauslass 52 verbunden ist und in den ersten Anodengaskanal 56 führt. Dieser endet am ersten Auslass 58, der wiederum mit dem Gebläseeinlass 28 verbunden ist, der im vorliegenden Ausführungsbeispiel durch den Kühlkanaleinlass 36 gebildet ist. Das Anodengas durchströmt den Kühlkanal 38 und gelangt über den Kühlkanalauslass 40 zum dritten Einlass 72, der über einen Umkehrkanal 84 mit dem dritten Auslass 70 verbunden ist, der wiederum dem Förderkanaleinlass 32 des Gebläses 10 gegenüberliegt. Entsprechend strömt das Anodengas weiter durch den Förderkanal 18 zum Gebläseauslass 30, der durch den Förderkanalauslass 34 gebildet ist und von dort in den zweiten Einlass 60 der Schnittstelleneinheit 44, der wiederum über den zweiten Anodengaskanal 62 mit dem zweiten Auslass 64 verbunden ist, der gegenüberliegend zum Brennstoffzelleneinlass 50 der Brennstoffzelleneinheit 48 angeordnet ist, so dass das Anodengas zurück zur Brennstoffzelleneinheit 48 gefördert wird.

Auch ist es möglich, diese serielle Verschaltung teilweise innerhalb des Gebläses 10 auszuführen, so dass in der Schnittstelleneinheit 44 nur die beiden Anodengaskanäle 56, 62 ausgebildet sind, wie dies in Figur 6 dargestellt ist. Hierzu erfolgt das Einströmen des Anodengases in den Kühlkanal 38 des Gebläses 10 in der bereits zu Figur 5 beschriebenen Weise. Der Kühlkanal 38 mündet in diesem Fall jedoch direkt innerhalb des Gebläses 10 in den Förderkanal 18, so dass das Anodengas ansonsten erneut in der zu Figur 5 beschriebenen Weise nach dem Förderkanal 18 weiterströmt. Selbstverständlich kann auch bei dieser Ausführung der Kühlkanaleinlass 36 als Kühlkanaleinlassstutzen 42 ausgebildet werden, der dann in den ersten Auslass 58 der Schnittstelleneinheit 44 ragt, während der Förderkanalauslass 34 am Flansch 26 ausgebildet wird und mit dem zweiten Einlass 60 korrespondiert. So kann der Kühlkanaleinlass 36 am Motorgehäuse 12 ausgebildet werden und der Förderkanalauslass 34 am Gebläsekopfgehäuse 20, welches dann einstückig mit dem Flansch 26 hergestellt werden kann.

Durch all diese Ausführungen werden Vorrichtungen zur Anodengasrezirkulation geschaffen, welche sehr einfach montierbar sind und eine hohe Dichtigkeit über eine lange Lebensdauer aufweisen, da die vorhandenen Schnittstellen durch den Verzicht auf Rohre und Schläuche reduziert werden. Zusätzlich wird auf einfache Weise eine Kühlung des Antriebsmotors des Rezirkulationsgebläses hergestellt, wodurch dieser zuverlässig vor Überhitzung geschützt ist.

Es sollte deutlich sein, dass in der Schnittstelleneinheit auch noch weitere Kanäle integriert werden können, wie beispielsweise Verbindungen zur Wasserstoffzuleitung, Regelventilen oder Abscheidern.

## Patentansprüche

1. Vorrichtung zur Anodengasrezirkulation in einem Brennstoffzellensystem mit
einem Gebläse (10) mit einem Gebläseeinlass (28) und einem Gebläseauslass (30),
einer Schnittstelleneinheit (44) mit einem ersten Anodengaskanal (56), der sich von einem ersten Einlass (54), der ausgebildet ist, mit einem Brennstoffzellenauslass (52) einer Brennstoffzelleneinheit (48) fluidisch verbunden zu werden, zu einem ersten Auslass (58), der mit dem Gebläseeinlass (28) verbunden ist, erstreckt, und einem zweiten Anodengaskanal (62), der sich von einem zweiten Einlass (60), der mit dem Gebläseauslass (30) verbunden ist, zu einem zweiten Auslass (64), der ausgebildet ist mit einem Brennstoffzelleneinlass (50) der Brennstoffzelleneinheit (48) fluidisch verbunden zu werden, erstreckt, **dadurch gekennzeichnet, dass**
das Gebläse (10) einen Förderkanal (18) mit einem Förderkanaleinlass (32) und einem Förderkanalauslass (34) und einen Kühlkanal (38), der einen Elektromotor (14) des Gebläses (10) zumindest teilweise umgibt, aufweist, welcher sich von einem Kühlkanaleinlass (36) zu einem Kühlkanalauslass (40) erstreckt und, wobei der Kühlkanal (38) über den Kühlkanaleinlass (36) mit dem ersten Auslass (58) oder einem dritten Auslass (70) der Schnittstelleneinheit (44) verbunden ist und/oder über den Kühlmittelauslass (40) mit einem dritten Einlass (72) oder dem zweiten Einlass (60) der Schnittstelleneinheit (44) verbunden ist und das Gebläse (10) an der Schnittstelleneinheit (44) befestigt ist.

2. Vorrichtung zur Anodengasrezirkulation in einem Brennstoffzellensystem nach Anspruch 1,
**dadurch gekennzeichnet, dass**
das Anodengas als Kühlmittel dient.

3. Vorrichtung zur Anodengasrezirkulation in einem Brennstoffzellensystem nach Anspruch 1 oder 2,
**dadurch gekennzeichnet, dass**
die Schnittstelleneinheit (44) eine Flanschfläche (46) aufweist, in der der erste Auslass (58) und der zweite Einlass (60) ausgebildet sind.

4. Vorrichtung zur Anodengasrezirkulation in einem Brennstoffzellensystem nach Anspruch 3,
**dadurch gekennzeichnet, dass**
das Gebläse (10) einen Flansch (26) aufweist, der mit der Flanschfläche (46) der Schnittstelleneinheit (44) verbunden ist, und in dem der Gebläseeinlass (28) und der Gebläseauslass (30) ausgebildet sind.

5. Vorrichtung zur Anodengasrezirkulation in einem Brennstoffzellensystem nach Anspruch 1 oder 2,
**dadurch gekennzeichnet, dass**
die Schnittstelleneinheit (44) den dritten Einlass (72) und den dritten Auslass (70) aufweist, wobei der dritte Auslass (70) mit dem Kühlkanaleinlass (36) verbunden ist, und der dritte Einlass (72) mit dem Kühlkanalauslass (40) verbunden ist.

6. Vorrichtung zur Anodengasrezirkulation in einem Brennstoffzellensystem nach Anspruch 3,
**dadurch gekennzeichnet, dass**
in der Flanschfläche (46) der Schnittstelleneinheit (44) der erste Auslass (58), der zweite Einlass (60), der dritte Auslass (70) und der dritte Einlass (72) ausgebildet sind.

7. Vorrichtung zur Anodengasrezirkulation in einem Brennstoffzellensystem nach Anspruch 4,
**dadurch gekennzeichnet, dass**
in dem Flansch (26) des Gebläses (10) der Förderkanaleinlass (32), der Förderkanalauslass (34), der Kühlkanaleinlass (36) und der Kühlkanalauslass (40) ausgebildet sind.

8. Vorrichtung zur Anodengasrezirkulation in einem Brennstoffzellensystem nach Anspruch 4,
**dadurch gekennzeichnet, dass**
in dem Flansch (26) des Gebläses (10) der Förderkanaleinlass (32) und der Förderkanalauslass (34) ausgebildet sind, und das Gebläse (10) einen Kühlkanaleinlassstutzen (42) und einen Kühlkanalauslassstutzen (43) aufweist, die in den dritten Auslass (70) und den dritten Einlass (72) der Schnittstelleneinheit (44) ragen.

9. Vorrichtung zur Anodengasrezirkulation in einem Brennstoffzellensystem nach einem der Ansprüche 5 bis 8,
**dadurch gekennzeichnet, dass**
in der Schnittstelleneinheit (44) ein Kühlmitteleinlasskanal (68) ausgebildet ist, der sich von einem Kühlmitteleinlass (66) zum dritten Auslass (70) erstreckt, und ein Kühlmittelauslasskanal (74) ausgebildet ist, der sich vom dritten Einlass (72) zu einem Kühlmittelauslass (76) erstreckt.

10. Vorrichtung zur Anodengasrezirkulation in einem Brennstoffzellensystem nach Anspruch 5,
**dadurch gekennzeichnet, dass**
der erste Anodengaskanal (56) eine Verzweigung (80) aufweist, so dass der erste Einlass (54) mit dem ersten Auslass (58) und dem dritten Auslass (70) verbunden ist und der zweite Anodengaskanal (62) eine Verzweigung (82) aufweist, so dass der zweite Einlass (60) und der dritte Einlass (72) mit dem zweiten Auslass (64) verbunden sind.

11. Vorrichtung zur Anodengasrezirkulation in einem Brennstoffzellensystem nach Anspruch 2,
**dadurch gekennzeichnet, dass**
der erste Anodengaskanal (56) über den ersten Auslass (58) mit dem Kühlkanaleinlass (36) verbunden ist, der Kühlkanalauslass (40) mit dem Förderkanaleinlass (32) des Gebläses (10) fluidisch verbunden ist und der Förderkanalauslass (34) über den zweiten Einlass (60) mit dem zweiten Anodengaskanal (62) verbunden ist.

12. Vorrichtung zur Anodengasrezirkulation in einem Brennstoffzellensystem nach Anspruch 11,
**dadurch gekennzeichnet, dass**
der Kühlkanalauslass (40) über den dritten Einlass (72), einen Umkehrkanal (84) und den dritten Auslass (70) in der Schnittstelleneinheit (44) mit dem Förderkanaleinlass (32) verbunden ist und der Förderkanalauslass (34) mit dem zweiten Einlass (60) verbunden ist.

13. Vorrichtung zur Anodengasrezirkulation in einem Brennstoffzellensystem nach einem der vorhergehenden Ansprüche, **dadurch gekennzeichnet, dass**
das Gebläse (10) zumindest ein Gebläsekopfgehäuse (20), in dem zumindest teilweise der Förderkanal (18) des Gebläses (10) ausgebildet ist, und ein Motorgehäuse (12) aufweist, welches den Elektromotor (14) zumindest teilweise umgibt.

14. Vorrichtung zur Anodengasrezirkulation in einem Brennstoffzellensystem nach Anspruch 12 und 13,
**dadurch gekennzeichnet, dass**
der Kühlkanalauslass (40) im Motorgehäuse (12) ausgebildet ist und der Förderkanaleinlass (32) im Gebläsekopfgehäuse (20) ausgebildet ist.

15. Vorrichtung zur Anodengasrezirkulation in einem Brennstoffzellensystem nach einem der vorhergehenden Ansprüche, **dadurch gekennzeichnet, dass**
die Schnittstelleneinheit (44) einstückig mit dem Motorgehäuse (12) oder dem Gebläsekopfgehäuse (20) ausgebildet ist.

## Claims

1. Device for anode gas recirculation in a fuel cell system, comprising a blower (10) having a blower inlet (28) and a blower outlet (30), an interface unit (44) having a first anode gas channel (56) extending from a first inlet (54), which is configured to be fluidically connected to a fuel cell outlet (52) of a fuel cell unit (48), to a first outlet (58) connected to the blower inlet (28), and a second anode gas channel (62) extending from a second inlet (60) connected to the blower outlet (30) to a second outlet (64), which is configured to be fluidically connected to a fuel cell inlet (50) of the fuel cell unit (48),
**characterized in that** the blower (10) comprises a delivery channel (18) having a delivery channel inlet (32) and a delivery channel outlet (34) and a cooling channel (38) which at least partially surrounds an electric motor (14) of the blower (10) and which extends from a cooling channel inlet (36) to a cooling channel outlet (40), wherein the cooling channel (38) is connected via the cooling channel inlet (36) to the first outlet (58) or to a third outlet (70) of the interface unit (44) and/or is connected via the cooling channel outlet (40) to a third inlet (72) or to the second inlet (60) of the interface unit (44), and the blower (10) is fastened to the interface unit (44).

2. Device for anode gas recirculation in a fuel cell system according to claim 1, **characterized in that** the anode gas serves as coolant.

3. Device for anode gas recirculation in a fuel cell system according to claim 1 or 2, **characterized in that** the interface unit (44) has a flange surface (46) in which the first outlet (58) and the second inlet (60) are formed.

4. Device for anode gas recirculation in a fuel cell system according to claim 3, **characterized in that** the blower (10) has a flange (26) which is connected to the flange surface (46) of the interface unit (44) and in which the blower inlet (28) and the blower outlet (30) are formed.

5. Device for anode gas recirculation in a fuel cell system according to claim 1 or 2, **characterized in that** the interface unit (44) has the third inlet (72) and the third outlet (70), wherein the third outlet (70) is connected to the cooling channel inlet (36), and the third inlet (72) is connected to the cooling channel outlet (40).

6. Device for anode gas recirculation in a fuel cell system according to claim 3, **characterized in that** the first outlet (58), the second inlet (60), the third outlet (70) and the third inlet (72) are formed in the flange surface (46) of the interface unit (44).

7. Device for anode gas recirculation in a fuel cell system according to claim 4, **characterized in that** the delivery channel inlet (32), the delivery channel outlet (34), the cooling channel inlet (36) and the cooling channel outlet (40) are formed in the flange (26) of the blower (10).

8. Device for anode gas recirculation in a fuel cell system according to claim 4, **characterized in that** the delivery channel inlet (32) and the delivery channel outlet (34) are formed in the flange (26) of the blower (10), and the blower (10) has a cooling channel inlet connector (42) and a cooling channel outlet connector (43) which project into the third outlet (70) and the third inlet (72) of the interface unit (44).

9. Device for anode gas recirculation in a fuel cell system according to any one of claims 5 to 8, **characterized in that** a coolant inlet channel (68) is formed in the interface unit (44), extending from a coolant inlet (66) to the third outlet (70), and a coolant outlet channel (74) is formed, extending from the third inlet (72) to a coolant outlet (76).

10. Device for anode gas recirculation in a fuel cell system according to claim 5, **characterized in that** the first anode gas channel (56) has a branch (80), such that the first inlet (54) is connected to the first outlet (58) and to the third outlet (70), and the second anode gas channel (62) has a branch (82), such that the second inlet (60) and the third inlet (72) are connected to the second outlet (64).

11. Device for anode gas recirculation in a fuel cell system according to claim 2, **characterized in that** the first anode gas channel (56) is connected via the first outlet (58) to the cooling channel inlet (36), the cooling channel outlet (40) is fluidically connected to the delivery channel inlet (32) of the blower (10), and the delivery channel outlet (34) is connected via the second inlet (60) to the second anode gas channel (62).

12. Device for anode gas recirculation in a fuel cell system according to claim 11, **characterized in that** the cooling channel outlet (40) is connected to the delivery channel inlet (32) via the third inlet (72), a reversal channel (84) and the third outlet (70) in the interface unit (44), and the delivery channel outlet (34) is connected to the second inlet (60).

13. Device for anode gas recirculation in a fuel cell system according to any one of the preceding claims, **characterized in that** the blower (10) comprises at least one blower head housing (20), in which the delivery channel (18) of the blower (10) is at least partially formed, and a motor housing (12) which at least partially surrounds the electric motor (14).

14. Device for anode gas recirculation in a fuel cell system according to claims 12 and 13, **characterized in that** the cooling channel outlet (40) is formed in the motor housing (12) and the delivery channel inlet (32) is formed in the blower head housing (20).

15. Device for anode gas recirculation in a fuel cell system according to any one of the preceding claims, **characterized in that** the interface unit (44) is formed in one piece with the motor housing (12) or the blower head housing (20).

## Revendications

1. Dispositif de recirculation de gaz anodique dans un système de pile à combustible, comprenant une soufflante (10) présentant une entrée de soufflante (28) et une sortie de soufflante (30), une unité d'interface (44) présentant un premier canal de gaz anodique (56) s'étendant depuis une première entrée (54), qui est conçue pour être reliée de manière fluidique à une sortie de pile à combustible (52) d'une unité de pile à combustible (48), jusqu'à une première sortie (58) reliée à l'entrée de soufflante (28), et un deuxième canal de gaz anodique (62) s'étendant depuis une deuxième entrée (60) reliée à la sortie de soufflante (30) jusqu'à une deuxième sortie (64) qui est conçue pour être reliée de manière fluidique à une entrée de pile à combustible (50) de l'unité de pile à combustible (48), **caractérisé en ce que** la soufflante (10) comprend un canal de refoulement (18) présentant une entrée de canal de refoulement (32) et une sortie de canal de refoulement (34), et un canal de refroidissement (38) qui entoure au moins partiellement un moteur électrique (14) de la soufflante (10) et qui s'étend depuis une entrée de canal de refroidissement (36) jusqu'à une sortie de canal de refroidissement (40), le canal de refroidissement (38) étant relié, par l'entrée de canal de refroidissement (36), à la première sortie (58) ou à une troisième sortie (70) de l'unité d'interface (44) et/ou étant relié, par la sortie de canal de refroidissement (40), à une troisième entrée (72) ou à la deuxième entrée (60) de l'unité d'interface (44), et la soufflante (10) étant fixée à l'unité d'interface (44).

2. Dispositif de recirculation de gaz anodique dans un système de pile à combustible selon la revendication 1, **caractérisé en ce que** le gaz anodique sert de fluide de refroidissement.

3. Dispositif de recirculation de gaz anodique dans un système de pile à combustible selon la revendication 1 ou 2, **caractérisé en ce que** l'unité d'interface (44) présente une surface de bride (46) dans laquelle sont formées la première sortie (58) et la deuxième entrée (60).

4. Dispositif de recirculation de gaz anodique dans un système de pile à combustible selon la revendication 3, **caractérisé en ce que** la soufflante (10) présente une bride (26) reliée à la surface de bride (46) de l'unité d'interface (44), et dans laquelle sont formées l'entrée de soufflante (28) et la sortie de soufflante (30).

5. Dispositif de recirculation de gaz anodique dans un système de pile à combustible selon la revendication 1 ou 2, **caractérisé en ce que** l'unité d'interface (44) présente la troisième entrée (72) et la troisième sortie (70), la troisième sortie (70) étant reliée à l'entrée de canal de refroidissement (36), et la troisième entrée (72) étant reliée à la sortie de canal de refroidissement (40).

6. Dispositif de recirculation de gaz anodique dans un système de pile à combustible selon la revendication 3, **caractérisé en ce que** la première sortie (58), la deuxième entrée (60), la troisième sortie (70) et la troisième entrée (72) sont formées dans la surface de bride (46) de l'unité d'interface (44).

7. Dispositif de recirculation de gaz anodique dans un système de pile à combustible selon la revendication 4, **caractérisé en ce que** l'entrée de canal de refoulement (32), la sortie de canal de refoulement (34), l'entrée de canal de refroidissement (36) et la sortie de canal de refroidissement (40) sont formées dans la bride (26) de la soufflante (10).

8. Dispositif de recirculation de gaz anodique dans un système de pile à combustible selon la revendication 4, **caractérisé en ce que** l'entrée de canal de refoulement (32) et la sortie de canal de refoulement (34) sont formées dans la bride (26) de la soufflante (10), et la soufflante (10) présente un raccord d'entrée de canal de refroidissement (42) et un raccord de sortie de canal de refroidissement (43) qui pénètrent dans la troisième sortie (70) et la troisième entrée (72) de l'unité d'interface (44).

9. Dispositif de recirculation de gaz anodique dans un système de pile à combustible selon l'une des revendications 5 à 8, **caractérisé en ce qu'**un canal d'entrée de fluide de refroidissement (68) est formé dans l'unité d'interface (44), s'étendant depuis une entrée de fluide de refroidissement (66) jusqu'à la troisième sortie (70), et un canal de sortie de fluide de refroidissement (74) est formé, s'étendant depuis la troisième entrée (72) jusqu'à une sortie de fluide de refroidissement (76).

10. Dispositif de recirculation de gaz anodique dans un système de pile à combustible selon la revendication 5, **caractérisé en ce que** le premier canal de gaz anodique (56) présente une bifurcation (80), de sorte que la première entrée (54) est reliée à la première sortie (58) et à la troisième sortie (70), et le deuxième canal de gaz anodique (62) présente une bifurcation (82), de sorte que la deuxième entrée (60) et la troisième entrée (72) sont reliées à la deuxième sortie (64).

11. Dispositif de recirculation de gaz anodique dans un système de pile à combustible selon la revendication 2, **caractérisé en ce que** le premier canal de gaz anodique (56) est relié, par la première sortie (58), à l'entrée de canal de refroidissement (36), la sortie de canal de refroidissement (40) est reliée de manière fluidique à l'entrée de canal de refoulement (32) de la soufflante (10), et la sortie de canal de refoulement (34) est reliée, par la deuxième entrée (60), au deuxième canal de gaz anodique (62).

12. Dispositif de recirculation de gaz anodique dans un système de pile à combustible selon la revendication 11, **caractérisé en ce que** la sortie de canal de refroidissement (40) est reliée à l'entrée de canal de refoulement (32) par la troisième entrée (72), un canal d'inversion (84) et la troisième sortie (70) dans l'unité d'interface (44), et la sortie de canal de refoulement (34) est reliée à la deuxième entrée (60).

13. Dispositif de recirculation de gaz anodique dans un système de pile à combustible selon l'une des revendications précédentes, **caractérisé en ce que** la soufflante (10) comprend au moins un carter de tête de soufflante (20), dans lequel est formé au moins partiellement le canal de refoulement (18) de la soufflante (10), et un carter de moteur (12) qui entoure au moins partiellement le moteur électrique (14).

14. Dispositif de recirculation de gaz anodique dans un système de pile à combustible selon les revendications 12 et 13, **caractérisé en ce que** la sortie de canal de refroidissement (40) est formée dans le carter de moteur (12) et l'entrée de canal de refoulement (32) est formée dans le carter de tête de soufflante (20).

15. Dispositif de recirculation de gaz anodique dans un système de pile à combustible selon l'une des revendications précédentes, **caractérisé en ce que** l'unité d'interface (44) est formée d'un seul tenant avec le carter de moteur (12) ou le carter de tête de soufflante (20).
